(19) Europäisches Patentamt

European Patent Office

Office européen des brevets

(11) Veröffentlichungsnummer: **0 053 372 B1**

# EUROPÄISCHE PATENTSCHRIFT

(45) Veröffentlichungstag der Patentschrift:
**19.02.86**

(21) Anmeldenummer: **81109956.3**

(22) Anmeldetag: **27.11.81**

(51) Int. Cl.⁴: **A 61 D 7/00**

(54) **Nasenspange.**

(30) Priorität: **03.12.80 DE 3045490**

(43) Veröffentlichungstag der Anmeldung:
**09.06.82 Patentblatt 82/23**

(45) Bekanntmachung des Hinweises auf die Patenterteilung:
**19.02.86 Patentblatt 86/8**

(84) Benannte Vertragsstaaten:
**AT BE CH DE FR GB IT LI LU NL SE**

(56) Entgegenhaltungen:
**DE - A - 2 910 629**
**DE - A - 2 926 283**
**US - A - 3 722 509**

(73) Patentinhaber: **HOECHST AKTIENGESELLSCHAFT,**
**Postfach 80 03 20, D-6230 Frankfurt am Main 80 (DE)**

(72) Erfinder: **Hiller, Dietrich, Dr., Riederbergstrasse 11,**
**D-6200 Wiesbaden (DE)**
Erfinder: **Klatt, Peter, Dr., Theresenstrasse 51,**
**D-6233 Kelkheim (Taunus) (DE)**
Erfinder: **Reul, Bernhard, Blumenstrasse 25,**
**D-6240 Königstein/Taunus (DE)**

## Beschreibung

Nasenspangen mit Bügel, mit Einrichtungen zur Aufnahme von wirkstofffreien Applikatoren, mit den Applikatoren, die einen etwa dreieckigen Grundriss aufweisen, und mit daran angeordneten, wirkstoffhaltigen Reservoiren werden in der deutschen Offenlegungsschrift 2 910 629 beschrieben. Diese Depotkörper können aufgeteilt sein in einen wirkstofffreien formbeständigen, gegebenenfalls elastischen Applikator und ein wirkstoffhaltiges, formvariables Reservoir, das mit dem Applikator verbunden ist.

In der Rinderhaltung werden die Tiere meist in Anbinde- oder Freilaufställen gehalten. Bei Kälbern kommt noch die Boxenhaltung hinzu. Sowohl bei dieser als auch in Freilaufställen zeigte sich, dass von den Tieren die bekannten Spangen häufiger abgeworfen wurden als in Anbindeställen. Dies beeinträchtigt den Effekt der Nasenspangen-Applikation bei den genannten Rinderhaltungsformen.

In den vorstehenden und nachfolgenden Ausführungen wird, wenn nichts anderes angegeben ist, unter «Rind» bzw. «Rinder» die Tierart Rind verstanden.

Es wurde nun überraschenderweise gefunden, dass die erfindungsgemässen Spangen in allen Rinderhaltungsarten gleich gute Sitzeigenschaften aufweisen und damit den gewünschten Effekt zeigen.

Die Erfindung betrifft daher eine Nasenspange mit Bügel, mit Einrichtungen zur Aufnahme von wirkstofffreien Applikatoren, mit den Applikatoren, die einen etwa dreieckigen Grundriss aufweisen und mit daran angeordneten wirkstoffhaltigen Reservoiren, dadurch gekennzeichnet, dass der Bügel nahe der einen Ecke jedes Applikators befestigt ist, wobei die Seiten des Dreiecks, welche in Richtung des Bügels zeigen, einen Winkel α von mindestens 40 Grad bilden.

Die Seiten des Dreiecks, welche in Richtung des Bügels der Nasenspange zeigen, bilden den Winkel α von vorzugsweise 50–110°. Die Seiten sind geradlinig, sie können aber auch eingestülpt oder ausgebuchtet sein, wobei dann von einem Dreieck abgeleitete Grundrisse entstehen, wie zum Beispiel nierenförmige Grundrisse.

Im folgenden wird die Erfindung am Ausführungsbeispiel erläutert:

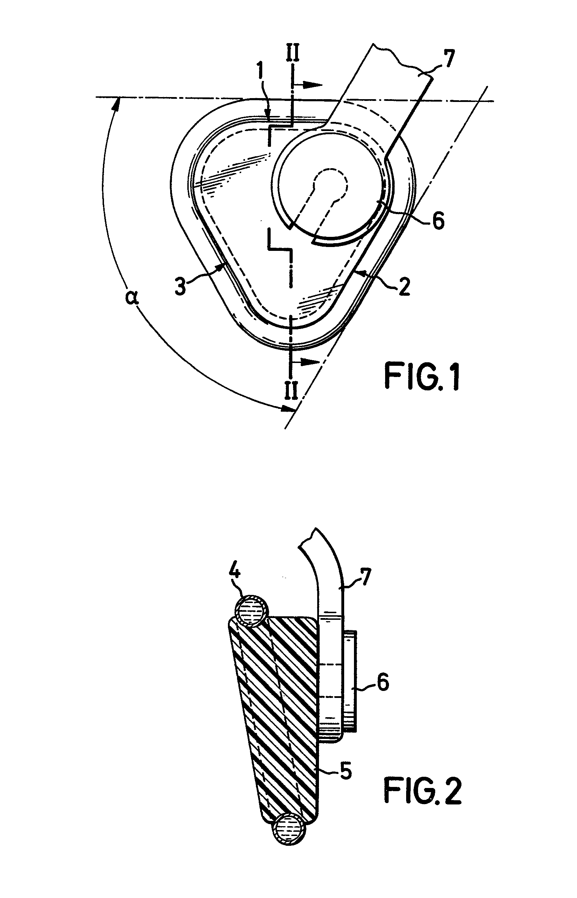

Die Figur 1 zeigt eine Teilansicht einer Ausführungsart der Erfindung, die Figur 2 einen Schnitt II–II von Figur 1.

Unter Berücksichtigung der anatomischen Verhältnisse sind die Ecken abgerundet. Dabei ist es nicht erforderlich, dass zum Beispiel alle drei Ecken des Dreiecks gleich abgerundet sind. Die Seiten des Dreiecks können gleich oder verschieden lang sein. Seite 1 ist vorzugsweise geradlinig, Seite 2 eingestülpt und Seite 3 ausgebuchtet.

Der Winkel α beträgt vorzugsweise 50 bis 110°, besonders bevorzugt ist einer von 95°.

Dieser Applikator 5 wird mit dem Reservoir 4 verbunden, wie dies in der DE-OS 2 926 283 beschrieben ist. Das Reservoir besitzt die in der genannten Patentanmeldung beschriebenen Formen. In Figur 2 ist das Reservoir 4 ein gefüllter, ringförmiger Schlauch, welcher mit dem Applikator 5 verbunden ist. In den Figuren stellt 6 das Verbindungsteil und 7 den Teil eines Bügels dar.

Die der Nasenscheidewand des Tieres zugewandte Seite des Applikators 5 kann abgerundet sein. Er kann abgerundet, kegel-oder sattelförmig sein und passt sich den anatomischen Verhältnissen im Nasenvorhof an.

Der Applikator kann überall gleich stark sein, bevorzugt ist aber aus technischen Gründen und insbesondere aus Gründen der Verträglichkeit und wegen des besseren Sitzes ein Applikator vorn stärker als hinten (also in Richtung Naseninneres).

Die erfindungsgemässe Nasenspange mit den Applikatoren und Reservoiren, eignet sich zur Applikation von Wirkstoffen bei Tieren, insbesondere bei Rindern.

Als Bügel mit Einrichtungen zur Aufnahme von Applikatoren und Reservoiren eignet sich derjenige, der in der DE-OS 2 926 283 beschrieben ist.

Die Applikatoren mit den Reservoiren können prinzipiell aus jedem geeigneten, physiologisch verträglichen Material hergestellt werden. Sie können nach dem in der DE-OS 2 926 283 beschriebenen Verfahren hergestellt werden.

## Patentansprüche

1. Nasenspange mit Bügel (7), mit Einrichtungen zur Aufnahme von wirkstofffreien Applikatoren (5), mit den Applikatoren (5), die einen etwa dreieckigen Grundriss aufweisen, und mit daran angeordneten, wirkstoffhaltigen Reservoiren (4), dadurch gekennzeichnet, dass der Bügel (7) nahe der einen Ecke jedes Applikators befestigt ist, wobei die Seiten des Dreiecks, welche in Richtung des Bügels (7) zeigen, einen Winkel α von mindestens 40 Grad bilden.

2. Nasenspange gemäss Anspruch 1, dadurch gekennzeichnet, dass die Seiten (1, 2) des Dreiecks, die in Richtung des Bügels (7) zeigen, einen Winkel α von 50 bis 110° bilden.

3. Nasenspange gemäss Ansprüchen 1 und 2, dadurch gekennzeichnet, dass der Winkel α 95° beträgt.

4. Nasenspange gemäss Ansprüchen 1 bis 3, dadurch gekennzeichnet, dass die Seiten des Dreiecks geradlinig, eingestülpt oder ausgebuchtet sind.

5. Nasenspange gemäss Ansprüchen 1 bis 4, dadurch gekennzeichnet, dass die Ecken sowie die der Nasenscheidewand zugewandte Seite des Applikators (5) abgerundet sind und die Applikatoren (5) entsprechend den anatomischen Verhältnissen kegel- oder sattelförmig abgerundet sind.

6. Nasenspange gemäss Ansprüchen 1 bis 5, dadurch gekennzeichnet, dass die Applikatoren (5) vorn stärker sind als hinten.

**Claims**

1. A nose-clip with a bow (7), with means for receiving applicators (5) free from active substance, equipped with the applicators (5) which have a nearly triangular outline, and with reservoirs fixed thereon and containing active substance wherein the bow (7) is fixed near of one edge of each applicator whereby the sides of the triangle directed towards the bow (7) form an angle α of at least 40°.

2. Nose-clip as claimed in Claim 1 wherein the sides (1, 2) of the triangle which are directed towards the bow (7) form an angle α from 50 to 110°.

3. Nose-clip as claimed in Claims 1 and 2 wherein the angle α is 95°.

4. Nose-clip as claimed in Claims 1 to 3 wherein the sides of the triangle are rectilinear, curved or dented.

5. Nose-clip as claimed in Claims 1 to 4 wherein the edges and the side of the applicator (5) facing the nasal septum are rounded off, and the applicators (5) are cone- or saddle-shaped in accordance with the anatomic conditions.

6. Nose-clip as claimed in Claims 1 to 5, wherein the front part of the applicators (5) is thicker than the back part.

**Revendications**

1. Pince nasale à fourche (7), comportant des dispositifs pour recevoir des applicateurs (5) sans agent actif, à applicateurs (5) ayant une forme approximative de triangle supportant des réservoirs (4) contenant l'agent actif, caractérisée en ce que la fourche (7) est fixée à proximité d'un coin de chaque applicateur, les côtés du triangle se trouvant dans le sens de la fourche (7) formant un angle α de 40° minimum.

2. Pince nasale selon la revendication 1, caractérisée, en ce que les côtés (1, 2) du triangle allant vers la fourche (7) forment un angle α de 50 à 110°.

3. Pince nasale selon les revendications 1 et 2, caractérisée en ce que l'angle α est de 95°.

4. Pince nasale selon les revendications 1 à 3, caractérisée en ce que les côtés du triangle sont rectilignes, rétrécis ou écartés.

5. Pince nasale selon les revendications 1 à 4, caractérisée en ce que les coins ainsi que le côté de l'applicateur (5) tourné vers la cloison nasale sont arrondis et les applicateurs (5) sont arrondis en forme de cône ou de selle conformément aux conditions anatomiques.

6. Pince nasale selon les revendications 1 à 5, caractérisée en ce que les applicateurs (5) sont plus forts à l'avant qu'à l'arrière.

FIG.1

FIG.2